# EUROPEAN PATENT APPLICATION

(11) **EP 2 894 140 A1**
(43) Date of publication of application: **15.07.2015**
(21) Application number: 13835347.9
(22) Date of filing: 30.08.2013
(51) Int. Cl.: C04B 35/64, B01D 39/20, B01J 35/04, C04B 38/00

(54) **HONEYCOMB STRUCTURE PRODUCTION METHOD**

(30) Priority: 05.09.2012 JP 2012195529
(71) Applicant: Sumitomo Chemical Company Limited, Tokyo 104-8260 (JP)
(72) Inventor: IKESHITA, Atsushi, 51317 Wroclaw (PL)
(74) Representative: Vossius & Partner Patentanwälte Rechtsanwälte mbB
(86) International application number: PCT/JP2013/073346
(87) International publication number: WO 2014/038485

(57) **Abstract**

A honeycomb structure production method comprising a burning step of burning a green molded body 50 having a plurality of channels 51 parallel to each other and separated from each other by partition walls 55 to produce a honeycomb structure, wherein in the burning step, the green molded body 50 is disposed on a support member 10, the support member 10 has a support portion 12 and a support portion 14 layered on the support portion 12, the support portion 14 supports one end surface 50a of the green molded body 50, and the diameter of the support portion 12 is smaller than the diameter of the support portion 14 in the direction perpendicular to a layered direction D of the support portion 12 and the support portion 14.

## Description

### Technical Field

The present invention relates to a honeycomb structure production method, and particularly to a honeycomb structure production method for producing a honeycomb structure by burning a green molded body.

### Background Art

In the prior art, as a ceramic filter (such as diesel particulate filter) for collecting minute particulates (such as carbon particulates) contained in exhaust gas exhausted from an internal combustion engine, such as a diesel engine, a honeycomb structure made of a porous ceramic material has been used. In applications of a ceramic filter and the like, a honeycomb structure is accommodated in a container, such as an exhaust pipe, for use in many cases. For example, Patent Literature 1 described below discloses that providing an indented portion or a protruding portion on the outer circumferential surface of the outer circumferential wall of a honeycomb structure hardly causes damage on the honeycomb structure and prevents shift thereof when the honeycomb structure is accommodated in a container.

### Citation List

### Patent Literature

Patent Literature 1: Japanese Patent Laid-Open No. 2005-125182

### Summary of Invention

### Technical Problem

When a honeycomb structure is accommodated in a container, the honeycomb structure is required to have high dimensional accuracy. To this end, it is desirable that a honeycomb structure production method allow improvement in dimensional accuracy of a honeycomb structure over the prior art.

The present invention has been made in view of the problems described above, and an object of the present invention is to provide a honeycomb structure production method that allows improvement in dimensional accuracy of a honeycomb structure.

### Solution to Problem

The honeycomb structure production method according to the present invention comprises a burning step of burning a green molded body having a plurality of channels parallel to each other and separated from each other by partition walls to produce a honeycomb structure, wherein in the burning step, the green molded body is disposed on a support member, the support member has a first support portion and a second support portion layered on the first support portion, the second support portion supports one end surface of the green molded body, and the diameter of the first support portion is smaller than the diameter of the second support portion in the direction perpendicular to a layered direction of the first support portion and the second support portion.

The honeycomb structure production method according to the present invention allows improvement in dimensional accuracy of a honeycomb structure, for example, improvement in flatness of an end surface of the honeycomb structure. The reason why the present invention achieves the advantageous effect described above is not known in detail, but the present inventor speculates as follows, but the reason is not limited to the following speculation.

The present inventor has found that when a green molded body is burned to produce a honeycomb structure by using a honeycomb structure production method of the prior art, a raised portion or a recessed portion formed in part of an end surface of the honeycomb structure causes insufficient flatness of the end surface of the honeycomb structure in some cases. The phenomenon is believed to result from temperature unevenness in the green molded body that occurs when the green molded body is burned, causing the degree of contraction that occurs when the burned green molded body cools down to vary across the green molded body

On the other hand, in the honeycomb structure production method according to the present invention, a green molded body is disposed on the support member in the burning step, the support member has a first support portion and a second support portion layered on the first support portion, the second support portion supports one end surface of the green molded body, and the diameter of the first support portion is smaller than the diameter of the second support portion in the direction perpendicular to the layered direction of the first support portion and the second support portion. In this case, the second support portion has a portion that is layered on the first support portion and a portion that is not layered on the first support portion. Part of the one end surface of the green molded body, specifically, the region that is supported by the layered portion where the first support portion and the second support portion are layered on each other is unlikely to be deformed toward the support member, whereas the other part of the one end surface, specifically, the region that is not supported by the layered portion is likely to be deformed toward the support member. In the honeycomb structure production method according to the present invention, a region where a raised portion tends to be formed is supported by the layered portion where the first support portion and the second support portion are layered on each other, whereby formation of a raised portion in the region can be avoided. Further, in the honeycomb structure production method according to the present invention, the second support portion is disposed so that a region where a recessed portion tends to be formed is not supported by the layered portion where the first support portion and the second support portion are layered on each other and the region is likely to be deformed toward the support member, whereby formation of a recessed portion in the region can be avoided. The honeycomb structure production method according to the present invention can therefore prevent raised and recessed portions from being formed on the one end surface of the honeycomb structure, whereby the flatness of the end surface of the honeycomb structure can be improved.

It is preferable that the ratio of the diameter of the first support portion to the diameter of the second support portion range from 0.50 to 0.98. In this case, the dimensional accuracy of the honeycomb structure can be further improved.

The first support portion and the second support portion may be portions separate from each other or may be integrated with each other.

The partition walls in the green molded body may contain an aluminum source and a titanium source.

It is preferable that the partition walls in the green molded body and the second support portion be made of the same material.

In the honeycomb structure production method according to the present invention, the plurality of channels may have first channels and second channels adjacent to the first channels, both ends of the first channels may be open, and both ends of the second channels may be open. Instead, in the honeycomb structure production method according to the present invention, the plurality of channels may have first channels and second channels adjacent to the first channels, the ends of the first channels on one end side of the green molded body may be closed, and the ends of the second channels on the other end side of the green molded body may be closed.

### Advantageous Effects of Invention

The honeycomb structure production method according to the present invention allows improvement in dimensional accuracy of a honeycomb structure, for example, improvement in flatness of an end surface of the honeycomb structure (for example, allows absolute value of flatness to be smaller than or equal to 1.0 mm).

### Brief Description of Drawings

[Figure 1] Figure 1 diagrammatically shows a first embodiment of a honeycomb structure.
[Figure 2] Figure 2 diagrammatically shows a second embodiment of the honeycomb structure.
[Figure 3] Figure 3 describes an embodiment of a honeycomb structure production method.
[Figure 4] Figure 4 shows the shape of a support member.
[Figure 5] Figure 5 describes another embodiment of the honeycomb structure production method.

### Description of Embodiments

Embodiments of the present invention will be described below in detail with reference to the drawings. It is, however, noted that the present invention is not limited to the following embodiments.

### <Honeycomb structure>

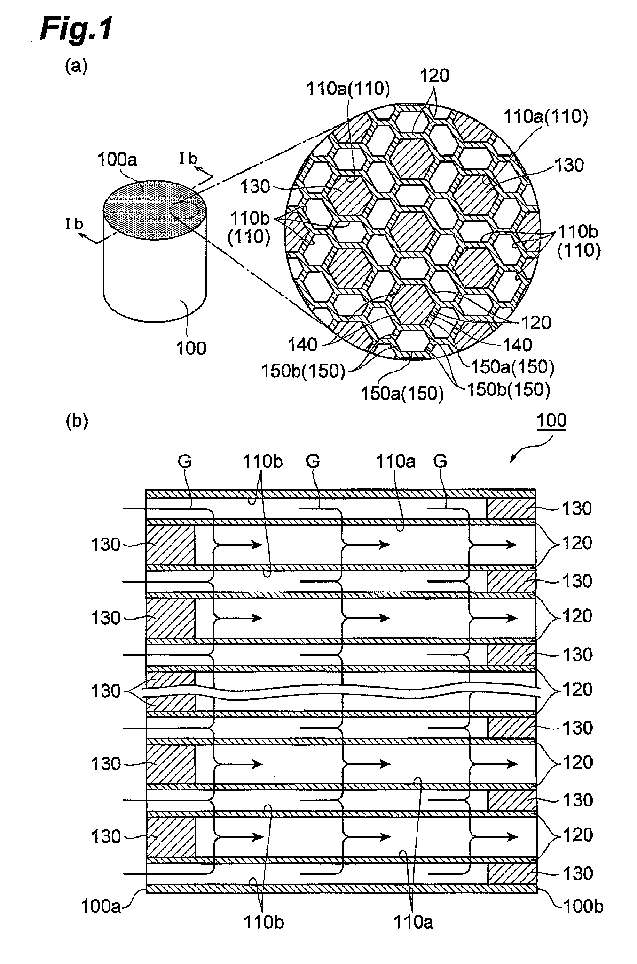

Figure 1 diagrammatically shows a first embodiment of a honeycomb structure. A honeycomb structure 100 is a cylindrical body having a plurality of channels 110 disposed therein roughly in parallel to each other, as shown in Figure 1. The plurality of channels 110 are separated from each other by partition walls 120, which extend roughly in parallel to the central axis of the honeycomb structure 100. The plurality of channels 110 have a plurality of channels 110a and a plurality of channels 110b adjacent to the channels 110a. The channels 110a and the channels 110b extend roughly perpendicular to both the end surfaces of the honeycomb structure 100.

One end of each of the channels 110a, which form part of the channels 110, is closed with a closing portion 130 at one end surface 100a of the honeycomb structure 100, and the other end of each of the channels 110a is open at the other end surface 100b of the honeycomb structure 100. On the other hand, one end of each of the channels 110b, which form the remainder of the channels 110, is open at the one end surface 100a, and the other end of each of the channels 110b is closed with a closing portion 130 at the other end surface 100b. In the honeycomb structure 100, for example, the end of each of the channels 110b at the one end surface 100a is open as a gas inflow port, and the end of each of the channels 110a at the other end surface 100b is open as a gas outflow port.

The cross section roughly perpendicular to the axial direction (longitudinal direction) of each of the channels 110a and the channels 110b is a hexagonal shape. It is preferable that the cross section of each of the channels 110a be a regular hexagonal shape having sides 140, which form the cross section, roughly equal to each other in terms of length but may be instead an elongated hexagonal shape. The cross section of each of the channels 110b is, for example, an elongated hexagonal shape but may be instead a regular hexagonal shape. The lengths of opposite sides of the cross section of each of the channels 110b are roughly equal to each other. The cross section of each of the channels 110b has as sides 150, which form the cross section, two (a pair of) longer sides (first sides) 150a roughly equal to each other in terms of length and four (two pairs of) shorter sides (second sides) 150b roughly equal to each other in terms of length. The shorter sides 150b are disposed on both sides of the longer sides 150a. The longer sides 150a face each other and are roughly in parallel to each other, and the shorter sides 150b face each other and are roughly in parallel to each other.

The channels 110a are disposed in the direction in which the channels 110a are arranged (direction roughly perpendicular to sides 140) alternately with the channels 110b in such a way that one channel 110b is disposed between adjacent channels 110a. Each of the sides 140 of each of the channels 110a faces one of the longer sides 150a of one of the plurality of channels 110b roughly in parallel to each other. That is, the channels 110 have a configuration unit including one channel 110a and six channels 110b that surround the channel 110a. In the configuration unit, each of the sides 140 of the channel 110a faces one of the longer sides 150a of the corresponding channel 110b. Each of the shorter sides 150b of each of the channels 110b faces one of the shorter sides 150b of the adjacent channel 110b roughly in parallel to each other.

The length of the honeycomb structure 100 in the axial direction of the channels 110a and 110b ranges, for example, from 50 to 300 mm. The outer diameter of the honeycomb structure 100 ranges, for example, from 100 to 250 mm. The density of the channels 110a and 110b (cell density) ranges, for example, from 50 to 400 cpsi (cell per square inch). The unit "cpsi" represents the number of channels (cells) per square inch. In the honeycomb structure 100, in a cross section thereof roughly perpendicular to the axial direction of the channels 110a and 110b, it is preferable that the sum of the areas of the gas-inflow-side channels be greater than the sum of the areas of the gas-outflow-side channels, that is, it is preferable that the sum of the areas of the channels 110b be greater than the sum of the areas of the channels 110a.

The length of the sides 140 ranges, for example, from 0.2 to 2.0 mm. The length of the longer sides 150a ranges, for example, from 0.4 to 2.0 mm. The length of the shorter sides 150b ranges, for example, from 0.3 to 2.0 mm. The thickness of the partition walls 120 (cell wall thickness) ranges, for example, from 0.1 to 0.8 mm. The porosity of the partition walls 120 ranges, for example, from 20 to 60 volume%. The diameter of the pores in the partition walls 120 ranges, for example, from 5 to 30 µm.

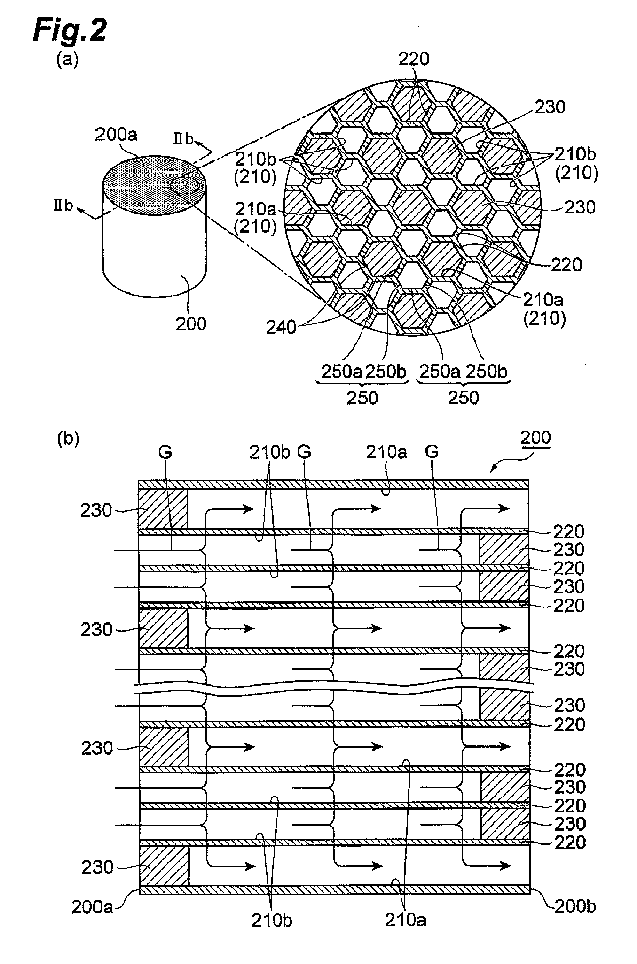

Figure 2 diagrammatically shows a second embodiment of the honeycomb structure. A honeycomb structure 200 is a cylindrical body having a plurality of channels 210 disposed therein roughly in parallel to each other, as shown in Figure 2. The plurality of channels 210 are separated from each other by partition walls 220, which extend roughly in parallel to the central axis of the honeycomb structure 200. The plurality of channels 210 have a plurality of channels 210a and a plurality of channels 210b adjacent to the channels 210a. The channels 210a and the channels 210b extend roughly perpendicular to both the end surfaces of the honeycomb structure 200.

One end of each of the channels 210a, which form part of the channels 210, is closed with a closing portion 230 at one end surface 200a of the honeycomb structure 200, and the other end of each of the channels 210a is open at the other end surface 200b of the honeycomb structure 200. On the other hand, one end of each of the channels 210b, which form the remainder of the channels 210, is open at the one end surface 200a, and the other end of each of the channels 210b is closed with a closing portion 230 at the other end surface 200b. In the honeycomb structure 200, for example, the end of each of the channels 210b at the one end surface 200a is open as a gas inflow port, and the end of each of the channels 210a at the other end surface 200b is open as a gas outflow port.

The cross section roughly perpendicular to the axial direction (longitudinal direction) of each of the channels 210a and the channels 210b is a hexagonal shape. It is preferable that the cross section of each of the channels 210a be a regular hexagonal shape having sides 240, which form the cross section, roughly equal to each other in terms of length but may be instead an elongated hexagonal shape. The cross section of each of the channels 210b is, for example, an elongated hexagonal shape but may be instead a regular hexagonal shape. The lengths of opposite sides of the cross section of each of the channels 210b differ from each other. The cross section of each of the channels 210b has as sides 250, which form the cross section, three longer sides (first sides) 250a roughly equal to each other in terms of length and three shorter sides (second sides) 250b roughly equal to each other in terms of length. The longer sides 250a and the shorter sides 250b face each other and are roughly in parallel to each other, and the shorter sides 250b are disposed on both sides of the longer sides 250a.

Two adjacent channels 210b are disposed between adjacent channels 210a in a direction roughly perpendicular to the direction in which the channels 210a are arranged, and the two adjacent channels 210b are symmetrically disposed with reference to the line connecting the centers of the cross sections of the adjacent channels 210a. Each of the sides 240 of each of the channels 210a faces one of the longer sides 250a of the corresponding channel 210b roughly in parallel to each other. That is, the channels 210 have a configuration unit including one channel 210a and six channels 210b that surround the channel 210a. In the configuration unit, each of the sides 240 of the channel 210a faces one of the longer sides 250a of the corresponding channel 210b. Each of the shorter sides 250b of each of the channels 210b faces one of the shorter sides 250b of the adjacent channel 210b roughly in parallel to each other.

The length of the honeycomb structure 200 in the axial direction of the channels 210a and 210b ranges, for example, from 50 to 300 mm. The outer diameter of the honeycomb structure 200 ranges, for example, from 100 to 250 mm. The density of the channels 210a and 210b (cell density) ranges, for example, from 50 to 400 cpsi. In the honeycomb structure 200, in a cross section thereof roughly perpendicular to the axial direction of the channels 210a and 210b, it is preferable that the sum of the areas of the gas-inflow-side channels be greater than the sum of the areas of the gas-outflow-side channels, that is, it is preferable that the sum of the areas of the channels 210b be greater than the sum of the areas of the channels 210a.

The length of the sides 240 ranges, for example, from 0.2 to 2.0 mm. The length of the longer sides 250a ranges, for example, from 0.4 to 2.0 mm. The length of the shorter sides 250b ranges, for example, from 0.3 to 2.0 mm. The thickness of the partition walls 220 (cell wall thickness) ranges, for example, from 0.1 to 0.8 mm. The porosity of the partition walls 220 ranges, for example, from 20 to 60 volume%. The diameter of the pores in the partition walls 220 ranges, for example, from 5 to 30 µm.

The partition walls 120 of the honeycomb structure 100 and the partition walls 220 of the honeycomb structure 200 are porous and contain, for example, a porous ceramic material (porous ceramic burned body). The partition walls 120 and 220 have a structure that allows transmission of a fluid (for example, exhaust gas containing minute particulates, such as carbon particulates). Specifically, a large number of communication holes through which a fluid can pass are formed in the partition walls 120 and 220.

Examples of a material of which the partition walls 120 and 220 are made include an oxide, such as alumina, silica, mullite, cordierite, glass, and an aluminum-titanate-based ceramic material; silicon carbide; and silicon nitride. Among them, it is preferable that the material of which the partition walls 120 and 220 are made be an aluminum-titanate-based ceramic material, more preferably aluminum titanate or aluminum magnesium titanate. The partition walls 120 and 220 may contain a glass phase.

The honeycomb structures 100 and 200 are suitable for a diesel particulate filter for collecting minute particulates (such as carbon particulates) contained in exhaust gas exhausted from an internal combustion engine, such as a diesel engine. For example, the honeycomb structure 100 is disposed in an exhaust passage in an internal combustion engine. In the honeycomb structure 100, a gas G supplied through the one end surface 100a into the channels 110b passes through the communication holes in the partition walls 120, reaches adjacent channels 110a, and is exhausted through the other end surface 100b, as shown in Figure 1(b). In this process, substances to be collected in the gas G are collected on the surfaces of the partition walls 120 or the communication holes therein and removed from the gas G. The honeycomb structure 100 thus functions as a filter. The same holds true for the honeycomb structure 200.

The application of the honeycomb structures 100 and 200 is not limited to a diesel particulate filter. The honeycomb structures 100 and 200 are, for example, used as a filtration filter used to filter a beverage, such as beer; a selective transmission filter for selectively transmitting gas components produced at the time of petroleum refining (carbon monoxide, carbon dioxide, nitrogen, and oxygen, for example); and a catalyst carrier.

As in the cases of the honeycomb structures 100 and 200 described above, the honeycomb structure may be so shaped that the cross section of each of the first channels (channels 110a, 210a) that is roughly perpendicular to the axial direction thereof has the first sides (longer sides 150a, 250a) and the second sides (shorter sides 150b, 250b) disposed on both sides of the first sides, each of the sides (sides 140, 240) that form the cross section of each of the second channels (channels 110b, 210b) that is roughly perpendicular to the axial direction thereof faces one of the first sides of the corresponding first channel, and each of the second sides of each of the first channels faces one of the second sides of the adjacent first channel, but the honeycomb structure is not limited to the shape described above. For example, the arrangement of the channels is not limited to a specific arrangement, and the arrangement of the central axes of the channels may be, for example, an equilateral triangle arrangement in which the central axes pass through the vertices of an equilateral triangle or a staggered arrangement.

Further, in the honeycomb structure, the cross section of each of the channels that is roughly perpendicular to the axial direction thereof is not limited to a hexagonal shape and may instead have a triangular shape, a rectangular shape, an octagonal shape, a circular shape, or an elliptical shape. The channels may be a combination of channels having different diameters and channels having different cross-sectional shapes. The honeycomb structure is not limited to a cylindrical body and may instead, for example, be an elliptical column, a triangular column, a rectangular column, a hexagonal column, or an octagonal column. The channels of the honeycomb structure may not be closed.

### <Honeycomb structure production method>

A honeycomb structure production method comprises, for example, a raw material preparing step of preparing a raw material mixture containing inorganic compound powder and an additive, a molding step of molding the raw material mixture to produce a honeycomb-shaped green molded body, and a burning step of burning the green molded body to produce a honeycomb structure. The honeycomb structure production method may further comprise a closing step of closing one end of each of the channels after the molding step but before the burning step or after the burning step. The honeycomb structure production method will be described below with reference to a case where the partition walls of the honeycomb structure contain an aluminum-titanate-based ceramic material by way of example.

### [Raw material preparing step]

In the raw material preparing step, after inorganic compound powder and an additive are mixed with each other, the mixture is kneaded into a raw material mixture. The inorganic compound powder contains, for example, an aluminum source, such as α-alumina powder, and a titanium source, such as anatase-type or rutile-type titania powder. The inorganic compound powder can further contain a magnesium source, such as magnesia powder or magnesia spinel powder, and/or a silicon source, such as silicon oxide powder or glass flit, as required. Each of the raw materials may be formed of one type or two or more types of substance.

It is preferable that the particulate diameter corresponding to 50% cumulative percentage (center particulate diameter, D50) of each of the raw materials on a volume basis measured by a laser diffraction method fall within the following ranges: D50 of the aluminum source ranges, for example, from 20 to 60 µm. D50 of the titanium source ranges, for example, from 0.1 to 25 µm. D50 of the magnesium source ranges, for example, from 0.5 to 30 µm. D50 of the silicon source ranges, for example, from 0.5 to 30 µm.

The raw material mixture may contain aluminum titanate or aluminum magnesium titanate. For example, when aluminum magnesium titanate is used as a constituent component of the raw material mixture, the aluminum magnesium titanate corresponds to a raw material mixture that is a combination of the aluminum source, the titanium source, and the magnesium source.

Examples of the additive include a pore former, a binder, a plasticizer, a disperser, and a solvent.

The pore former can be made of a material that vanishes at temperatures lower than or equal to the temperature at which the molded body is degreased and burned in the burning step. In the degreasing or burning process, when the molded body containing the pore former is heated, the pore former vanishes, for example, in a combustion process. As a result, spaces are formed at the locations where the pore former was present, and the inorganic compound powder located between the spaces contracts in the burning process, whereby communication holes through which a fluid is allowed to pass can be formed in the partition walls.

The pore former is, for example, corn starch, barley starch, wheat starch, tapioca starch, bean starch, rice starch, peas starch, coral palm starch, canna starch, or potato starch. The particulate diameter corresponding to 50% cumulative percentage (D50) of the pore former on a volume basis measured by a laser diffraction method ranges, for example, from 5 to 50 µm. When the raw material mixture contains a pore former, the content of the pore former ranges, for example, from 1 to 25 mass parts with respect to 100 mass parts of the inorganic compound powder.

The binder is, for example, cellulose, such as methyl cellulose, hydroxypropyl methyl cellulose, carboxymethyl cellulose, or sodium carboxymethyl cellulose; alcohol, such as polyvinyl alcohol; a salt, such as lignin sulfonate; or wax, such as paraffin wax or microcrystalline wax. The content of the binder in the raw material mixture is, for example, 20 mass parts or smaller with respect to 100 mass parts of the inorganic compound powder.

The plasticizer is, for example, alcohol, such as glycerin; higher fatty acid, such as caprylic acid, lauric acid, palmitic acid, arachidic acid, oleic acid, or stearic acid; metal salt stearate, such as aluminum stearate; and polyoxy alkylene alkyl ether (polyoxy ethylene polyoxy propylene butyl ether, for example). The content of the plasticizer in the raw material mixture is, for example, 10 mass parts or smaller with respect to 100 mass parts of the inorganic compound powder.

The disperser is, for example, inorganic acid, such as nitric acid, hydrochloric acid, or sulfuric acid; organic acid, such as oxalic acid, citric acid, acetic acid, malic acid, or lactic acid; alcohol, such as methanol, ethanol, or propanol; or ammonium polycarboxylate. The content of the disperser in the raw material mixture is, for example, 20 mass parts or smaller with respect to 100 mass parts of the inorganic compound powder.

The solvent is, for example, water, preferably ion-exchanged water from the viewpoint of a smaller amount of impurity. When the raw material mixture contains a solvent, the content of the solvent ranges, for example, from 10 to 100 mass parts with respect to 100 mass parts of the inorganic compound powder.

### [Molding step]

In the molding step, a honeycomb-shaped green molded body is produced. The green molded body has the same structure as that of the honeycomb structure described above or a structure similar to that of the honeycomb structure except that no closing portion is provided. In the molding step, for example, what is called extrusion molding, in which a uniaxial extruder is used to knead the raw material mixture and extrude the kneaded raw material mixture through a die, can be employed.

### [Burning step]

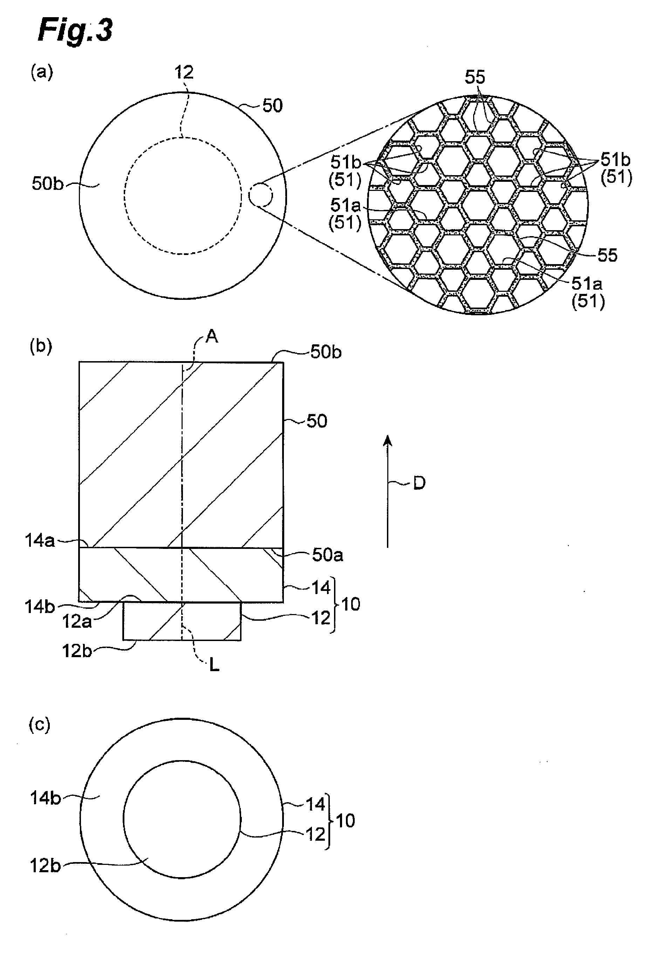

In the burning step, the green molded body produced in the molding step is burned to produce a honeycomb structure. Figure 3 describes the honeycomb structure production method according to the present embodiment and shows a layered structure having a support member 10 and a green molded body 50 disposed on the support member 10. Figure 3(a) is a plan view of the layered structure. Figure 3(b) is a cross-sectional view of the layered structure. Figure 3(c) is a bottom view of the layered structure. For example, the green molded body 50 has the same structure as that of the honeycomb structure 200 in that no closing portion 230 is provided and has a plurality of channels 51 separated by partition walls 55 and roughly parallel to each other. When the partition walls 220 of the honeycomb structure 200 contain an aluminum-titanate-based ceramic material, the partition walls 55 contain at least an aluminum source and a titanium source. In the burning step, the green molded body 50 is burned with the green molded body 50 disposed on the support member 10.

The support member 10 has a support portion (first support portion) 12 and a support portion (second support portion) 14 layered on the support portion 12. The support portion 12 and the support portion 14 are portions separate from each other. In the present embodiment, the support portion 12 is in contact with the support portion 14, and the support portion 14 is in contact with the green molded body 50. In the present embodiment, the support portion 12, the support portion 14, and the green molded body 50 are layered on each other in the vertical direction. The support portion 14 supports one end surface 50a of the green molded body 50. The one end surface 50a is a surface roughly perpendicular to the central axis of the channels 51 and faces away from and roughly in parallel to the other end surface 50b of the green molded body 50. In the present embodiment, the green molded body 50 is disposed so that the axial direction of the channels 51 is roughly in parallel to a layered direction D of the support portion 12 and the support portion 14.

A material of the support portion 12 only needs to have sufficient heat resistance at the burning temperature in the burning step, examples of which include an aluminum-titanate-based ceramic material (such as aluminum titanate and aluminum magnesium titanate), MgAl₂O₄, alumina, magnesia, zirconia, or mullite. The support portion 12 may have a honeycomb shape or a solid shape. It is preferable that the thickness of the support portion 12 be greater than or equal to 0.5 mm, more preferably greater than or equal to 1.0 mm considering that a space is readily provided below the support portion 14. It is preferable that the thickness of the support portion 12 be smaller than or equal to 30 mm, more preferably smaller than or equal to 15 mm considering that high stability is ensured.

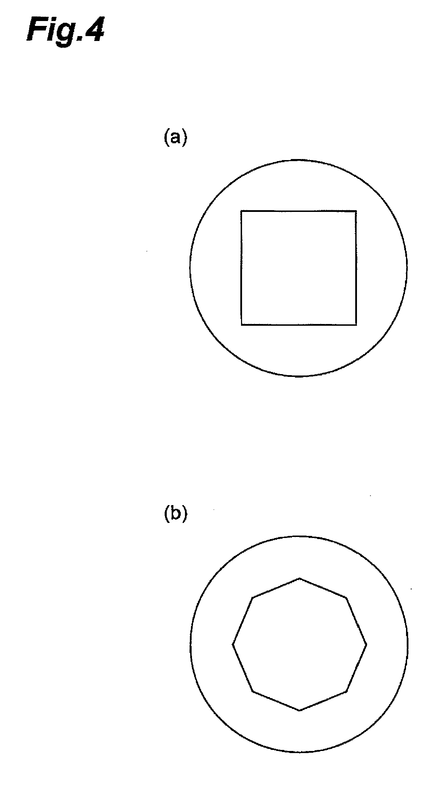

The support portion 12 has, for example, a principal surface 12a, which supports the support portion 14. The support portion 12 has, for example, a principal surface 12b, which faces away from the principal surface 12a and comes into contact, for example, with a shelf plate in a burning furnace. Examples of a shape of each of the principal surfaces 12a and 12b include a circular shape, an elliptical shape, a rectangular shape (such as oblong shape, square shape in Figure 4(a)), a hexagonal shape (such as regular hexagonal shape), an octagonal shape (such as regular octagonal shape in Figure 4(b)), or an oval shape. The support portion 12 may have a flat plate shape having principal surfaces facing away from and roughly in parallel to each other or a shape having principal surfaces facing away from each other with at least one of the principal surfaces being a curved surface.

The support portion 14 may contain any of the same material of which the partition walls 55 in the green molded body 50 are made and a material different from the material of which the partition walls 55 are made. When the support portion 14 contains a material similar to the material of which the partition walls 55 are made, the dimensional accuracy of the honeycomb structure can be further improved because the contraction rates of the support portion 14 and the partition walls 55 in the burning process are similar to each other. From the same point of view, it is preferable that the partition walls 55 and the support portion 14 be made of the same material. The support portion 14 may have the same honeycomb shape as that of the green molded body 50 or may have a solid shape. When the support portion 14 has the same honeycomb shape as that of the green molded body 50, the dimensional accuracy of the honeycomb structure can be further improved. The thickness of the support portion 14 ranges, for example, from 25 to 50 mm.

The support portion 14 has, for example, a principal surface 14a, which supports the one end surface 50a of the green molded body 50. The support portion 14 has, for example a principal surface 14b, which faces away from the principal surface 14a and is supported by the principal surface 12a of the support portion 12. The support portion 14 may have a flat plate shape having principal surfaces facing away from and roughly in parallel to each other or a shape having principal surfaces facing away from each other with at least one of the principal surfaces being a curved surface (shape in which principal surface 14b is concave, for example).

The diameter of the support portion 12 is smaller than the diameter of the support portion 14 in a direction roughly perpendicular to the layered direction D of the support portion 12 and the support portion 14. That is, the support portion 12 has a diameter smaller than the diameter of the support portion 14 in a direction roughly perpendicular to the layered direction D. When the support portion 12 or the support portion 14 has a polygonal shape in a plane roughly perpendicular to the layered direction D, the "diameter" in the plane is assumed to be the length of a segment of a straight line passing through the center of the support portion 12 or the support portion 14 and two vertices of the polygonal shape, specifically, the length of the segment between the vertices.

It is preferable that the diameter of the support portion 12 be 80 mm or greater, more preferably 90 mm or greater, still more preferably 95 mm or greater considering that the flatness of an end surface (bottom surface, for example) of the honeycomb structure can be further improved (for example, absolute value of flatness ranging from 0.0 to 1.0 mm is likely to be provided). It is preferable that the diameter of the support portion 12 be 144 mm or smaller, more preferably 120 mm or smaller, still more preferably 110 mm or smaller considering that a space is readily provided below the support portion 14.

The diameter of the support portion 14 is, for example, equal to or greater than the diameter of the green molded body 50 in a direction roughly perpendicular to the layered direction D. That is, the support portion 14 has a diameter equal to or greater than the diameter of the green molded body 50 in a direction roughly perpendicular to the layered direction D. The diameter of the support portion 14 ranges, for example, from 100 to 250 mm. It is preferable that the diameter of the principal surface 14a and the diameter of the one end surface 50a of the green molded body 50 be equal to each other considering that the dimensional accuracy of the honeycomb structure can be further improved and cracking is unlikely to occur in the burning process, and it is more preferable that the shapes of the principal surface 14a and the one end surface 50a be the same and the diameter of the principal surface 14a and the diameter of the one end surface 50a be equal to each other from the same point of view.

It is preferable that the ratio of the diameter of the support portion 12 to the diameter of the support portion 14 in a direction roughly perpendicular to the layered direction D be greater than or equal to 0.50, more preferably greater than or equal to 0.55, still more preferably greater than or equal to 0.60, particularly preferably greater than or equal to 0.65 considering that the dimensional accuracy of the honeycomb structure can be further improved. It is preferable that the ratio of the diameter of the support portion 12 to the diameter of the support portion 14 be smaller than or equal to 0.98, more preferably smaller than or equal to 0.84, still more preferably smaller than or equal to 0.76 considering that the dimensional accuracy of the honeycomb structure can be further improved.

The support portion 12 and the support portion 14 are, for example, disposed so that an extension L of a central axis A of the green molded body 50 intersects the support portion 12 (principal surface 12a, for example) and the support portion 14(principal surface 14a, for example). The support portion 12 is, for example, disposed so that the principal surface 12a covers the center (center of gravity, for example) of the principal surface 14b of the support portion 14. The support portion 14 is, for example, disposed so that the principal surface 14a covers the center (center of gravity, for example) of the one end surface 50a of the green molded body 50, for example, disposed so that the principal surface 14a covers the entire one end surface 50a as shown in Figure 3. The support portion 14 is disposed so that at least part of an outer circumferential portion of the principal surface 14b is exposed off the support portion 12, for example, disposed so that the entire outer circumferential portion of the principal surface 14b is exposed off the support portion 12 as shown in Figure 3. The support portion 12 and the support portion 14 are, for example, disposed so that the center (center of gravity, for example) of the principal surface 12a and the center (center of gravity, for example) of the principal surface 14b face each other. The support portion 14 and the green molded body 50 are, for example, disposed so that the center (center of gravity, for example) of the principal surface 14a and the center (center of gravity, for example) of the one end surface 50a face each other. In Figure 3, the green molded body 50, the support portion 12, and the support portion 14 are disposed so that the centers (centers of gravity, for example) of the one end surface 50a of the green molded body 50, the principal surfaces 12a and 12b of the support portion 12, and the principal surfaces 14a and 14b of the support portion 14 are arranged along a straight line in the vertical direction. It is, however, noted that the centers of the green molded body 50, the support portion 12, and the support portion 14 describe above may not be arranged along a straight line or the centers of the surfaces facing each other may not face each other.

In the burning step, the channels 51 in the green molded body 50 may be closed or may not be closed. That is, the green molded body 50 may have a configuration in which the plurality of channels 51 have first channels 51a and second channels 51b adjacent to the first channels 51a, both ends of the first channels 51a are open, and both ends of the second channels 51b are open, as shown in Figure 3. The green molded body 50 may instead have a configuration in which the plurality of channels 51 have first channels 51a and second channels 51b adjacent to the first channels 51 a, the ends of the first channels 51a on one end side of the green molded body 50 are closed, and the ends of the second channels 51b on the other end side of the green molded body 50 are closed.

The burning temperature in the burning step is typically higher than or equal to 1300°C, preferably higher than or equal to 1400°C. The burning temperature is typically lower than or equal to 1650°C, preferably lower than or equal to 1550°C. The temperature raising speed is not limited to a specific value but typically ranges from 1 to 500°C per hour. The burning period only needs to be long enough for the inorganic compound powder to transition to aluminum-titanate-based crystal, varies depending on the amount of raw material, the form of the burning furnace, the burning temperature, the burning atmosphere, and other factors, and typically ranges from 10 minutes to 24 hours.

The burning is typically performed in the atmosphere but may be performed in inert gas, such as nitrogen gas or argon gas, or in reducing gas, such as carbon monoxide gas or hydrogen gas, depending on the type of the raw material powder (aluminum source, titanium source, magnesium source, and silicon source, for example) or the ratio of the used amounts of the raw materials. The burning may instead be performed in an atmosphere in which partial water vapor pressure is lowered.

The burning is typically performed by using a burning furnace, such as a tubular electric furnace, a box-type electric furnace, a tunnel furnace, a far-infrared furnace, a microwave heating furnace, a shaft furnace, a reverberatory furnace, a rotary furnace, and a roller hearth furnace. The burning may be performed in batches or continuously. Further, the burning may be performed in a stationary or running manner.

In the burning step, before the molded body is burned, calcination (degreasing) for removing the binder and other organic additives contained in the molded body (raw material mixture) may be performed. The calcination is performed in an initial stage of the burning step, that is, in a temperature raising stage (temperature range from 100 to 900°C, for example) before the green molded body reaches the burning temperature. In the calcination, it is preferable that the temperature raising speed and the oxygen concentration be minimized.

The calcination and the burning of the green molded body may be performed individually or continuously. In the calcination, the green molded body only needs to be heated to a temperature higher than or equal to the thermal decomposition temperature of the binder and other organic additives but lower than the burning temperature of the inorganic compound powder. In the burning step, the calcined green molded body only needs to be heated to a temperature higher than or equal to the burning temperature of the inorganic compound powder.

### [Closing step]

When the closing step is carried out after the molding step but before the burning step, after one end of each of the channels in the green molded body produced in the molding step but not yet burned is closed with a closing portion, the green molded body with the closing portions is burned in the burning step to produce a honeycomb structure including the closing portions that close the ends of the channels on one side. When the closing step is carried out after the burning step, after the ends of the channels on one side in the honeycomb burned body produced in the burning step are closed with closing portions, the honeycomb burned body with the closing portions are burned to produce a honeycomb structure including the closing portions that close the ends of the channels on one side. The closing portions can be formed of the same mixture as the raw material mixture for producing the green molded body described above.

The honeycomb structure can thus be produced.

The present inventor has found that when the green molded body 50 is disposed on a support member formed of a single-layer support portion (support member formed only of support portion 14, for example) and the green molded body 50 is burned, it is difficult to sufficiently prevent a raised portion and a recessed portion from being formed on one end surface of the honeycomb structure and it is therefore difficult to improve the flatness of the end surface of the honeycomb structure.

In contrast, in the honeycomb structure production method according to the present embodiment, the green molded body 50 is disposed on the support member 10 in the burning step, the support member 10 has the support portion 12 and the support portion 14 layered on the support portion 12, the support portion 14 supports the one end surface 50a of the green molded body 50, and the diameter of the support portion 12 is smaller than the diameter of the support portion 14 in a direction roughly perpendicular to the layered direction D of the support portion 12 and the support portion 14. In this case, the support portion 14 has a portion that is layered on the support portion 12 and a portion that is not layered on the support portion 12. Part of the one end surface 50a of the green molded body 50, specifically, the region that is supported by the layered portion where the support portion 12 and the support portion 14 are layered on each other is unlikely to be deformed toward the support member 10, whereas the other part of the one end surface 50a, specifically, the region that is not supported by the layered portion is likely to be deformed toward the support member 10. In the honeycomb structure production method according to the present embodiment, a region where a raised portion tends to be formed is supported by the layered portion where the support portion 12 and the support portion 14 are layered on each other, whereby a situation in which a raised portion is formed in the region can be avoided. Further, in the honeycomb structure production method according to the present embodiment, the support portion 12 is disposed so that the layered portion where the support portion 12 and the support portion 14 are layered on each other does not support a region where a recessed portion tends to be formed so that the region is likely to be deformed toward the support member 10, for example, under the gravity, whereby a situation in which a recessed portion is formed in the region can be avoided. Therefore, the honeycomb structure production method according to the present embodiment can prevent raised and recessed portions from being formed on one end surface of the honeycomb structure and allows improvement in the flatness of the end surface of the honeycomb structure.

For example, the present inventor has found that when a honeycomb structure is produced by burning a green molded body, there is a case where a central portion of an end surface of the honeycomb structure is raised relative to the periphery of the honeycomb structure. The phenomenon is believed to result from the fact that when a green molded body is burned, the temperature in a peripheral portion of the green molded body tends to be higher than the temperature in a core portion of the green molded body and hence the degree of contraction that occurs when the burned green molded body cools down is greater in the peripheral portion of the green molded body than the degree in the core portion of the green molded body.

In this case, in the honeycomb structure production method according to the present embodiment, for example, the support portion 12 and the support portion 14 are disposed so that the extension L of the central axis A of the green molded body 50 intersects the support portion 12 and the support portion 14 (see Figure 3, for example). In this case, a central portion of the one end surface 50a of the green molded body 50 is covered with the layered portion where the support portion 12 and the support portion 14 are layered on each other and is therefore unlikely to be raised toward the support member 10 (downward in vertical direction in Figure 3). On the other hand, an outer edge portion of the one end surface 50a of the green molded body 50 is not covered with the layered portion where the support portion 12 and the support portion 14 are layered on each other and is therefore likely to be deformed toward the support member 10, which prevents the outer edge portion from being recessed in the direction away from the support member 10 (upward in vertical direction in Figure 3). As a result, a situation in which the central portion of the one end surface 50a of the green molded body 50 is raised and the outer edge portion of the one end surface 50a is recessed can be avoided, whereby the flatness of the end surface of the honeycomb structure can be improved.

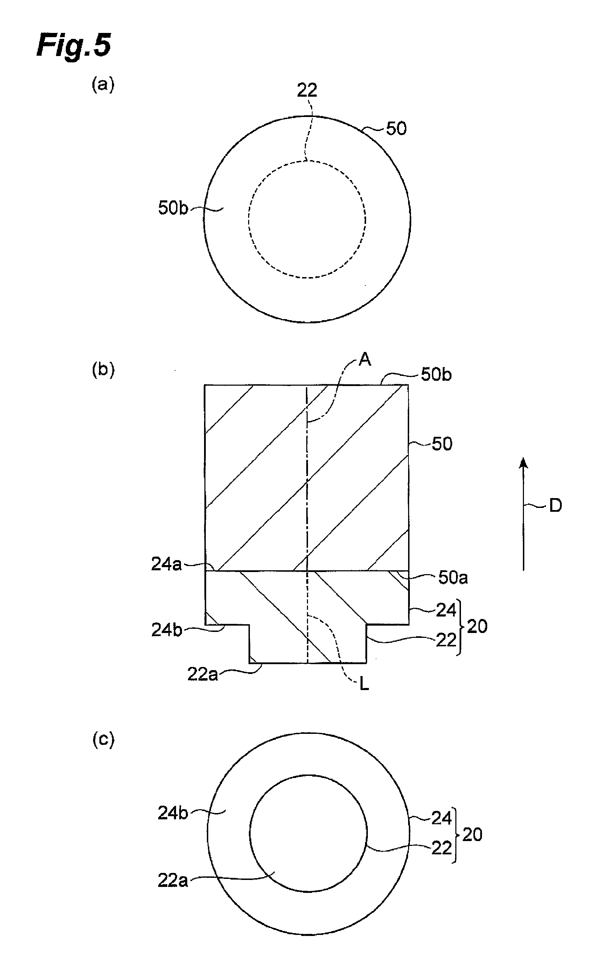

The honeycomb structure production method is not limited to the embodiment described above. For example, the configuration of the support member is not limited to the configuration described above. A support member 20 shown in Figure 5 has a support portion (first support portion) 22 and a support portion (second support portion) 24 layered on the support portion 22, and the support portion 22 and the support portion 24 are integrated with each other. The support member 20 is the same as the support member 10 except that the support portion 12 and the support portion 14 in the support member 10 are integrated with each other. The support portion 22 has, for example, a principal surface 22a as a surface that comes into contact, for example, with a shelf plate in a burning furnace. The support portion 24 has a principal surface 24a, which supports the one end surface 50a of the green molded body 50, and has a surface 24b as a surface facing away from the principal surface 24a and exposed off the support portion 22.

### Examples

The present invention will be described below in more detail with reference to Examples, but the present invention is not limited to the following Examples.

A raw material mixture containing raw material powder made of aluminum magnesium titanate (Al₂O₃ powder, TiO₂ powder, and MgO powder), alumino-silicate glass powder, ceramic powder having a complex phase that is a combination of the phases of aluminum magnesium titanate, alumina, and alumino-silicate glass (composition formula at the time of preparation: 41.4Al₂O₃-49.9TiO₂-5.4MgO-3.3SiO₂, the numerals in the formula represent mole ratios), an organic binder, a lubricant, a pore former, a plasticizer, a disperser, and water (solvent) was prepared. The contents of primary components of the raw material mixture were adjusted to the following values:

### [Components of raw material mixture]

Al₂O₃ powder: 37.3 mass parts
TiO₂ powder: 37.0 mass parts
MgO powder: 1.9 mass parts
Alumino-silicate glass powder: 3.0 mass parts
Ceramic powder: 8.8 mass parts
Pore former (potato starch, D50: 25 µm): 12.0 mass parts
Organic binder 1 (methyl cellulose, manufactured by Samsung Fine Chemicals, MC-40H): 5.5 mass parts
Organic binder 2 (hydroxypropyl methyl cellulose, manufactured by Samsung Fine Chemicals, PMB-40H): 2.4 mass parts

The raw material mixture described above was kneaded, extruded, dried, and closed to produce a green molded body having the same configuration as that of the honeycomb structure 200 (Figure 2). Subsequently, as a support used in the burning step, supports 1 and supports 2 shown in Table 1 were provided. Each of the supports 1 was a disk-shaped honeycomb body made of the same material as the material of which the partition walls in the green molded body were made and had a slightly curved concave principal surface on one side. The thickness of each of the supports 1 was 33 mm. As the supports 2, a plurality of supports having thicknesses ranging from 2.5 to 15 mm were provided in Examples 1 to 5, a support having a thickness of 2.5 mm (having square shape each side of which is 100 mm in length) was provided in Example 6. In Examples 1 to 6, green molded bodies were each burned by using an arrangement configuration in which the support 1, the support 2, and the green molded body were sequentially layered on each other (configuration in which the concave surface of the support 1 is oriented downward in the arrangement configuration in Figure 3) to produce honeycomb structures. In Comparative Example 1, a green molded body was burned in an arrangement configuration in which the support 1 and the green molded body were sequentially layered on each other to produce a honeycomb structure. The burning temperature was 1490°C.

In each of the honeycomb structures in Examples 1 to 6 and Comparative Example 1, the flatness of the end surface (bottom surface) in contact with the support was measured in accordance with the ASME standard. Table 1 shows results of the measurement.

**[Table 1]**

| | Support 1 | Support 2 | | | | B/A | Flatness (mm) |
|---|---|---|---|---|---|---|---|
| | Diameter A (mm) | Shape | Diameter B (mm) | Thickness (mm) | Material | | |
| Example 1 | 144 | Regular octagonal shape, honeycomb body | 100 | 2.5 - 15 | Aluminum titanate | 0.69 | 0.2 - 1.0 |
| Example 2 | 144 | Circular shape, honeycomb body | 80 | 2.5 - 15 | MgAl₂O₄ | 0.56 | -1.0 - -0.9 |
| Example 3 | 144 | Circular shape, honeycomb body | 90 | 2.5 - 15 | Aluminum titanate | 0.63 | -0.3 - -0.4 |
| Example 4 | 144 | Circular shape, honeycomb body | 100 | 2.5 - 15 | Aluminum titanate | 0.69 | 0.2 - 0.5 |
| Example 5 | 144 | Circular shape; honeycomb body | 110 | 2.5 - 15 | Aluminium titanate | 0.76 | 0.7 |
| Example 6 | 144 | Square shape, solid body | 141 | 2.5 | Alumina | 0.98 | 0.3 - 0.7 |
| Comparative Example 1 | 144 | Not applicable | | | | - | 1.2-1.7 |

As shown in Table 1, it is ascertained in Examples 1 to 6 that the absolute values of the flatness are smaller than or equal to 1.0 mm, showing high dimensional accuracy. On the other hand, it is ascertained in Comparative Example 1 that the absolute value of the flatness is greater than 1.0 mm.

### Reference Signs List

10, 20: Support member, 12, 22: Support portion (first support portion), 14, 24: Support portion (second support portion), 50: Green molded body, 50a: One end surface, 51: Channel, 51a: Channel (first channel), 51b: Channel (second channel), 55: partition wall, 100, 200: Honeycomb structure, D: Layered direction

## Claims

1. A honeycomb structure production method comprising:
a burning step of burning a green molded body having a plurality of channels parallel to each other and separated from each other by partition walls to produce a honeycomb structure,
wherein in the burning step, the green molded body is disposed on a support member,
the support member has a first support portion and a second support portion layered on the first support portion,
the second support portion supports one end surface of the green molded body, and
a diameter of the first support portion is smaller than a diameter of the second support portion in a direction perpendicular to a layered direction of the first support portion and the second support portion.

2. The method according to claim 1,
wherein a ratio of the diameter of the first support portion to the diameter of the second support portion ranges from 0.50 to 0.98.

3. The method according to claim 1 or 2,
wherein the first support portion and the second support portion are portions separate from each other.

4. The method according to claim 1 or 2,
wherein the first support portion and the second support portion are integrated with each other.

5. The method according to any one of claims 1 to 4,
wherein the partition walls contain an aluminum source and a titanium source.

6. The method according to any one of claims 1 to 5,
wherein the partition walls and the second support portion are made of the same material.

7. The method according to any one of claims 1 to 6,
wherein the plurality of channels have first channels and second channels adjacent to the first channels,
both ends of the first channels are open, and
both ends of the second channels are open.

8. The method according to any one of claims 1 to 6,
wherein the plurality of channels have first channels and second channels adjacent to the first channels,
ends of the first channels on one end side of the green molded body are closed, and
ends of the second channels on another end side of the green molded body are closed.
